# EUROPEAN PATENT APPLICATION

(11) **EP 4 521 118 A1**
(43) Date of publication of application: **12.03.2025**
(21) Application number: 23306479.9
(22) Date of filing: 06.09.2023
(51) Int. Cl.: G01N 35/00, B01L 7/00, C12Q 1/686, G01N 35/04

(54) **LOADING UNIT FOR AN ANALYSIS DEVICE**

(71) Applicant: Stilla Technologies, 94800 Villejuif (FR)
(72) Inventor: BERNAY, Sébastien, 42670 ECOCHE (FR); MILLET, Eric, 42153 RIORGES (FR); BARNAY, Thomas, 42155 VILLEMONTAIS (FR); LESPAGNOL, Maxime, 42370 RENAISON (FR)
(74) Representative: IPAZ

(57) **Abstract**

Device (1) for PCR analysis, comprising a loading unit (2) having a first movement mechanism to move a sample holder receiving one or more samples from one to the other between an entry area and a loading area, the device (1) comprising a second movement mechanism (5) configured to move at least one sample between two areas selected from a list comprising said loading area, a thermal and/or pressure area of a thermal and/or pressure unit (3), and a scanning area of a scanning unit (4). Method for controlling such a device (1), and corresponding computer program and computer-readable storage medium.

## Description

### Technical field

The present invention relates to genetic analysis techniques, in particular to devices for genetic analysis by polymerase chain reaction (PCR).

The invention is of particular, non-limiting interest for PCR techniques known as "digital PCR" (dPCR).

### Background

In the field of genetic analysis and particularly dPCR techniques, systems have been proposed to automatically move a consumable containing a sample to be analysed between different functional areas, namely an area for subjecting the sample to a thermocycling operation and another area for subjecting the sample to a scanning operation.

There is a need to improve the architecture of the systems known in the prior art, in particular to optimise their compactness.

### Description of the invention

The invention generally provides a loading unit for a device, preferably dedicated to genetic analysis or the like, preferably for genetic analysis by polymerase chain reaction (PCR), and more preferably for digital PCR (dPCR).

The loading unit of the invention comprises an entry area, a loading area, and a movement mechanism configured to move a sample holder receiving or comprising one or more samples from one to the other between said entry area and said loading area.

An object of the invention relates more particularly to a device - preferably for genetic analysis, in particular for genetic analysis by polymerase chain reaction -, comprising:
- a loading unit as defined above, namely a loading unit comprising an entry area, a loading area, and a movement mechanism, which is a first movement mechanism, configured to move a sample holder receiving or comprising one or more samples from one to the other between said entry area and said loading area,
- a thermal and/or pressure unit defining a thermal and/or pressure area configured to receive one or more samples for a thermal and/or pressure operation,
- a scanning unit defining a scanning area configured to receive one or more samples for a scanning operation,
- a second movement mechanism configured to move at least one sample between two areas selected from a list comprising said loading area, said thermal and/or pressure area, and said scanning area.

The device of the invention thus comprises two different movement mechanisms, said first movement mechanism having the function to load or unload a sample holder, while said second movement mechanism is dedicated to move sample(s) in order to carry out a sample analysis.

The loading unit of the invention may include any combination of the optional features described below.

The loading unit may be configured to move a sample holder either directly from one to the other between said entry area and said loading area, or through one or more intermediate area(s).

In both cases, the first movement mechanism may be configured to move a sample holder in several successive positions or areas, either continuously or at intervals.

In an embodiment, said first movement mechanism comprises a displacer configured to cooperate with said sample holder to move said sample holder from one to the other between said entry area and at least one intermediate area.

In an embodiment, the displacer comprises one or more hooks configured to cooperate with said sample holder to pull said sample holder from said entry area to said intermediate area and/or from said intermediate area to said entry area.

Alternatively or complementary, the displacer may be configured to cooperate with said sample holder to push said sample holder from said intermediate area to said entry area and/or from said entry area to said intermediate area.

For example, according to a first alternative, the hooks of the displacer may be configured to cooperate with said sample holder to pull said sample holder from said entry area to said intermediate area, and the displacer may be configured to cooperate with said sample holder to push said sample holder from said intermediate area to said entry area.

According to a second alternative, the hooks of the displacer may be configured to cooperate with said sample holder to pull said sample holder from said intermediate area to said entry area, and the displacer may be configured to cooperate with said sample holder to push said sample holder from said entry area to said intermediate area.

Of course, these alternatives are not restrictive.

In an embodiment, said first movement mechanism comprises a carriage configured to cooperate with said sample holder to move said sample holder from one to the other between said intermediate area and said loading area.

In a preferred embodiment, the displacer is movable along a first axis and the carriage is movable along an axis that is oblique or perpendicular to the first axis.

This feature makes it possible to optimize the architecture and compactness of the loading unit and of the corresponding device.

In an embodiment, the loading unit comprises a storage module defining compartments, each of which being intended to store a respective sample holder.

In an embodiment, the loading unit and/or the corresponding device comprises a storage area.

In the embodiments listed above, said intermediate area may be a first intermediate area, and the storage area may form a second intermediate area.

In an embodiment, the storage module is movable between several positions in each of which one respective of the compartments is configured to form said storage area.

In an embodiment, the displacer is configured to move said sample holder from one to the other between said entry area and said storage area and/or between said storage area and said first intermediate area.

In an embodiment, the storage module is configured to move the displacer and/or said sample holder to engage the displacer with, or disengage it from, the sample holder.

In an embodiment, the displacer is movable along a first axis and the storage module is movable along an axis that is perpendicular or oblique to the first axis.

In an embodiment, the displacer is configured to pass, at least partially, through at least one of said compartments of the storage module when the displacer moves the sample holder, in particular from one to the other between the entry area and at least one intermediate area that can be said first intermediate area.

In an embodiment, the displacer is configured to pass, at least partially, through a space defined by the carriage when the displacer moves the sample holder, in particular from one to the other between two areas that can include the storage area and another intermediate area, for example said first intermediate area.

In an embodiment, the loading unit comprises a stop member forming a stop for said sample holder.

In an embodiment, the stop member is configured to be moved toward a release position under the action of a movement of the displacer.

According to another aspect, the invention relates to a method for controlling a loading unit as defined above, or a device comprising such a loading unit.

In an embodiment, the method comprises a loading step that comprises moving a sample holder from said entry area to said loading area with said first movement mechanism.

In an embodiment, the method comprises an unloading step that comprises moving a sample holder from said loading area to said entry area with said first movement mechanism.

Depending on the embodiment of the loading unit, the loading step may comprises:
- moving the displacer to move said sample holder from one to the other between said entry area and at least one intermediate area, and/or
- making one or more hooks of the displacer to cooperate with said sample holder to pull said sample holder from said entry area to said intermediate area and/or from said intermediate area to said entry area, and/or
- making the displacer to cooperate with said sample holder to push said sample holder from said intermediate area to said entry area and/or from said entry area to said intermediate area, and/or
- making the carriage to cooperate with said sample holder to move said sample holder from one to the other between said intermediate area and said loading area, and/or
- moving the displacer to move said sample holder from one to the other between said entry area and said storage area and/or between said storage area and said first intermediate area, and/or
- moving the storage module to move the displacer and/or said sample holder to engage the displacer with, or disengage it from, the sample holder, and/or
- moving the displacer to move the stop member toward said release position.

In an embodiment, the method comprises a step of moving one or more of said samples from said loading area to said thermal and/or pressure area, with said second movement mechanism, for a thermal and/or pressure operation.

In an embodiment, the method comprises a step of moving one or more of said samples from said thermal and/or pressure area to said loading area with said second movement mechanism.

In an embodiment, the method comprises a step of moving one or more of said samples from said loading area to said scanning area, with said second movement mechanism, for a scanning operation.

In an embodiment, the method comprises a step of moving one or more of said samples from said thermal and/or pressure area to said scanning area, with said second movement mechanism, for a scanning operation.

In an embodiment, the method comprises a step of moving one or more of said samples from said scanning area to said thermal and/or pressure area.

In an embodiment, the method comprises a step of moving one or more of said samples from said scanning area to said loading area with said second movement mechanism.

According to another aspect, the invention relates to a computer program comprising instructions to cause a loading unit as defined above, or a device comprising such a loading unit, to execute the step(s) of a method as defined above.

According to another aspect, the invention relates to a computer-readable storage medium having stored thereon a computer program as defined above.

The invention offers numerous advantages over the prior art.

In particular, independence of said first and second movement mechanisms allows for dissociation between the loading / unloading operation and analysis or dPCR processes, allowing great efficiency and time saving.

The invention can also help to improve laboratory organization, in particular in the embodiments where the loading unit comprises a storage module, thanks to the consumable storage capacity and the ability to load or unload consumables at any time while device internal processes are still running.

Typically, a storage module comprising eight compartments, each compartment storing one sample holder, each sample holder receiving or comprising three samples in the form of three microfluidic chips, each microfluidic chip (typically RUBY or SAPPHIRE chip from Stilla^{®}) comprising 16 microfluidic chambers, each microfluidic chamber being scanned by the scanning unit in order to obtain three fluorescence images per microfluidic chamber, allows to obtain 1152 fluorescence images automatically within a few hours - possibly overnight - without human operator intervention once the sampler holders have been loaded in the device according to the invention.

A single and straightforward interface to load and unload consumable(s) may be formed by the loading unit of the invention, facilitating the interactions with the device when loading or unloading consumables.

The present invention, and all its aspects, embodiments and advantages associated therewith will become more readily apparent in view of the detailed description of particular embodiments provided below, including the accompanying drawings.

### Brief description of the drawings

The following, non-limiting, embodiments of the invention are described with reference to the accompanying drawings in which:
- Figure 1 is a schematic representation of a device according to the invention, including a loading unit, a thermocycler and pressure unit, a scanning unit, and a movement mechanism configured to move one or more microfluidic chips from one to another of these units;
- Figure 2 is a perspective view of a device according to the invention, showing a casing of the device that houses different units;
- Figure 3 is a perspective view of the device of figure 2, with its casing removed, showing a loading unit, a thermocycler and pressure unit, a scanning unit, and a movement mechanism;
- Figure 4 is a perspective view of a loading unit according to the invention;
- Figure 5 is a partial cross-section side view of the loading unit of figure 4;
- Figure 6 is a partial cross-section top view of the loading unit of figure 4;
- Figure 7 is a cross-section front view of a storage module panel of the loading unit of figure 4;
- Figure 8 is a partial top view of the loading unit of figure 4;
- Figure 9 is a partial cross-section top view of the loading unit of figure 4;
- Figure 10 is a partial cross-section side view of the loading unit of figure 4;
- Figure 11 is a partial cross-section side view of the loading unit of figure 4;
- Figure 12 is a partial cross-section top view of the loading unit of figure 4;
- Figure 13 is a partial cross-section side view of the loading unit of figure 4;
- Figure 14 is a partial cross-section top view of the loading unit of figure 4;
- Figure 15 is a partial cross-section side view of the loading unit of figure 4;
- Figure 16 is a perspective view of the device of figure 2 with its casing removed;
- Figure 17 is an enlargement view of part of figure 16.

These embodiments being in no way limitative, we can consider variants of the invention including only a selection of characteristics subsequently described or illustrated, isolated from other described or illustrated characteristics (even if this selection is taken from a sentence containing these other characteristics), if this selection of characteristics is sufficient to give a technical advantage or to distinguish the invention over the state of the art. This selection includes at least one characteristic, preferably a functional characteristic without structural details, or with only a part of the structural details if that part is sufficient to give a technical advantage or to distinguish the invention over the state of the art.

### Detailed description of embodiments

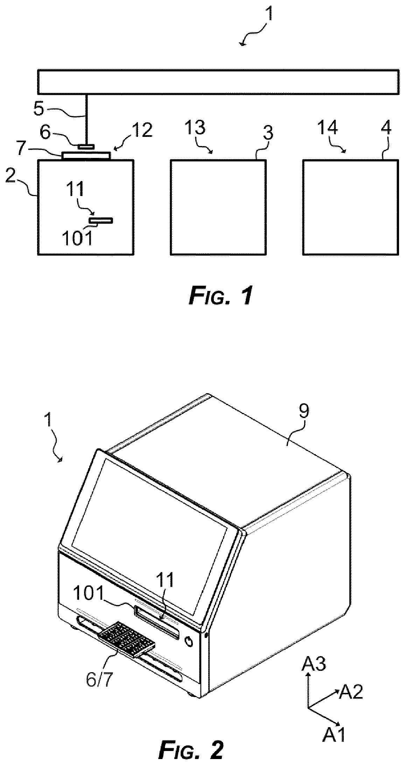

Figure 1 shows schematically a device 1 in accordance with the invention.

The device 1 of figure 1 comprises a loading unit 2, a thermal and/or pressure unit 3, a scanning unit 4, and a movement mechanism 5 configured to move at least one microfluidic chip 6 from one to another of these units.

In this example, unit 3 is a thermocycler and pressure unit 3. Accordingly, the corresponding area 13 described below is also called "thermocycling area" in the following description. Of course, in alternative embodiments, the unit 3 may comprise another type of thermal unit - configured to control the temperature of at least one sample 6, of or from sample holder 7, in a thermal area typically at a constant, variable or cyclical temperature - and/or pressure unit - configured to control the pressure of at least one sample 6, of or from sample holder 7, in a pressure area typically at a constant, variable or cyclical temperature - and define the corresponding thermal and/or pressure area (not shown).

The thermal and/or pressure unit 3 will mainly be called thermal unit 3 or thermocycler unit 3 or unit 3 in the following description to simplify the description. The thermal and/or pressure area 13 will mainly be called thermal area 13 or thermocycling area 13 or area 13 in the following description to simplify the description.

In this non-limitative example, the device 1 is designed to perform a genetic analysis using a polymerase chain reaction (PCR) technique, known as "digital PCR" (dPCR). Some dPCR techniques or processes are for instance described in documents WO2010/036352, FR2996545A1, and WO2021/130271A1.

As known per se, the thermocycler unit 3 is typically configured to amplify segments of deoxyribonucleic acid (DNA) in a sample via the PCR, and the scanning unit 4 is typically configured to detect an optical signal, in particular spectroscopic or fluorescence properties of emitted or scattered light, from the sample or microfluidic chip - of or from sample holder7 - subjected, in a scanning area 14, to an excitation light. The scanning unit 4 comprises means for emitting the excitation light, typically comprising at least one light emitting diode and/or laser.

In this non-limitative example, the device 1 is configured to perform such an analysis from samples contained in microfluidic chips 6 arranged in holders 7, also called "sample holders" or "chips holders" or "consumables". Known microfluidic chips and corresponding dPCR analysis are described for instance in the documents FR2950544, FR2958186, FR2996545A1, WO2020/109379, WO2020/109388, and WO2020/216791. In a non-limitative way, microfluidic chips can be "RUBY CHIPS" and/or "SAPPHIRE CHIPS" marketed by STILLA TECHNOLOGIES.

An embodiment of the device 1 is shown in figure 2. In this embodiment, the device 1 comprises a casing 9, globally parallelepipedic in shape, which houses components of the device 1.

In the example of figure 2, the casing 9 houses both the units 2, 3 and 4, and the movement mechanism 5 illustrated in figure 1.

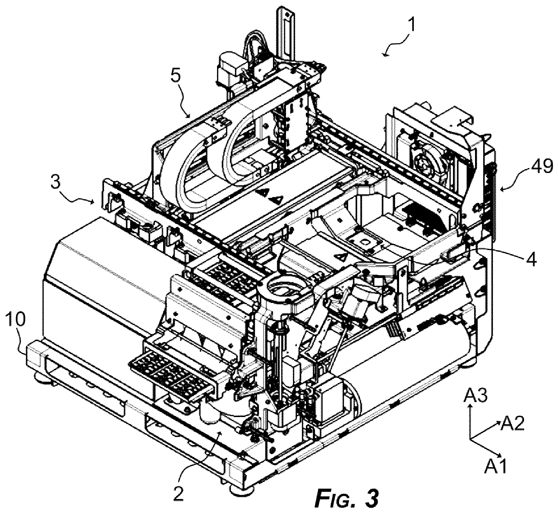

Figure 3 shows components of the device 1, including components forming the units 2, 3 and 4, and the movement mechanism 5, and a frame 10 supporting these components.

With reference to figure 1 and 2, the device 1 is generally configured to receive at an entry area 11 a sample holder 7, which receives one or more samples, each sample being in this example a microfluidic chip 6, and to move the sample holder 7 from the entry area 11 to a loading area 12.

Referring to figure 1, the device 1 is arranged so that the movement mechanism 5 can take at least one of the microfluidic chips 6 from the sample holder 7 positioned in said loading area 12, for example using gripping fingers (not shown) of the movement mechanism 5, in order to move this microfluidic chip 6 from the loading area 12 either to a thermocycling area 13 defined by the thermocycler unit 3, or to the scanning area 14 defined by the scanning unit 4.

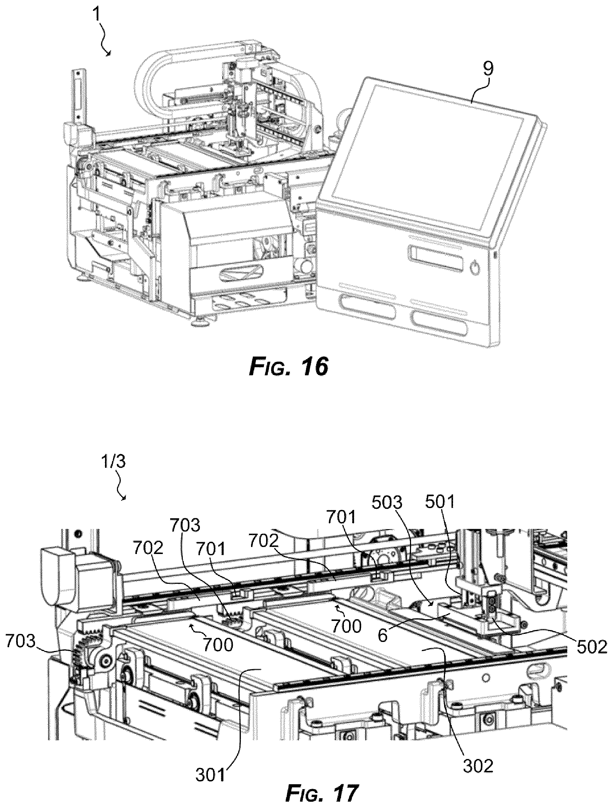

The movement mechanism 5 typically comprises a robotic arm (standard X-Y-Z Cartesian robot) comprising at least two gripping fingers 501, 502 as illustrated in figures 16 and 17.

The device 1 is also configured to move the sample holder 7 from the loading area 12 to the entry area 11, in particular once at least one of the microfluidic chip 6 of the sample holder 7 has been analysed, in particular subjected to a thermocycling operation at the unit 3 and to a scanning operation at the scanning unit 4 in a way known per se.

In this non-limitative example, the unit 3 comprises, as known per se, two unit chambers 301 and 302 illustrated in figures 16 and 17.

Each unit chamber 301, 302 comprises one space configured to receive one or more sample/microfluidic chips 6 - of or from sample holder 7 - and a movable cover able to hermetically close said space.

Each chamber 301, 302 comprises at least one or preferably several heating plates configured to make thermal cycles in said space, typically as described in the documents EP3285928 or EP3708256.

Unit 3 is configured to make pressure cycles in said space, using for example an air pump, an air tank, electrovalves, and/or pressure regulators comprised in the device 1, subjected to at least one sample contained in said space, typically as described in EP3285928 or EP3708256.

The heating plates are ensuring the heat transfer to/from the chips 6. These heating plates use a shade of aluminium which allow fast heat transfer. The heating plates are part of the airtight box around the chips. They are tightened with the structure part with an O-ring to ensure tightness.

In this non-limiting example, each chamber 301, 302 further comprises:
- Temperature sensors mounted on the heating plates using a thermal glue. These temperature sensors are high accuracy thermistors with negative temperature coefficient. They allow measuring the effective temperature of heating plates, providing feedback for the regulation loop of Peltier elements;
- Peltier elements, also referred to as "thermos-electric coolers", configured to ensure the heat transfer to heat or cool the heating plates. To achieve this, the electrical current across the Peltier is regulated in closed loop with temperature sensors placed on the heating plates. The Peltier current is driven by an electronic board of the electronic and/or computer system. The Peltier elements are clamped between the heatsink and the heating plates with thermal material to ensure a good heat transfer. Each heating plate has two Peltier elements thermally connected on it;
- A heatsink, which, combine with a fan, ensures the heat dissipation in the instrument surrounding air. The heat sink is mounted on the structure part and acts also as a support for Peltier elements.

In this embodiment, the movement mechanism 5 is configured to open or close the at least one cover of unit 3, in particular to open or close - individually or in groups - each cover of each unit chamber 301, 302.

The movement mechanism 5 is configured to open or close the rotating and movable cover - preferably individually - of each unit chamber 301, 302 by a movement of mechanism 5.

Typically, the movement mechanism 5 comprises a tool - typically a tip 503 - configured to engage with a mechanism 700 configured to move the movable cover of one unit chamber 301, 302.

Each mechanism 700 comprises a part - typically an element 701 forming a groove - configured to engage with the tool 503 so that a movement of the tool 503 results in a movement of part 701 and thus an opening or a closing of the rotating cover of unit chamber 301, 302.

In each mechanism 700, part 701 is integral with a piece 702 mounted in translation and comprising teeth engaged - either directly or through at least one intermediate cogwheel hidden in figure 17 - with teeth of a rotating cogwheel 703. The opening or closing of the rotating cover depends on the direction of rotation of cogwheel 703, which depends on the direction of translation of piece 702, which has the same direction of translation of tool 503 of the movement mechanism 5.

In a non-limitative way, the scanning unit 4 may comprise the scanning system described in the document WO2022/063845.

Figures 2 to 15 comprise a reference frame defining three different axis A1, A2 and A3 that are perpendicular to each other, to indicate a relative position of the device 1, and in particular of the loading unit 2.

In operation, the axis A3 extends vertically in the figures.

In operation, the axis A1 extends horizontally in the figures.

In operation, the axis A2 extends horizontally in the figures.

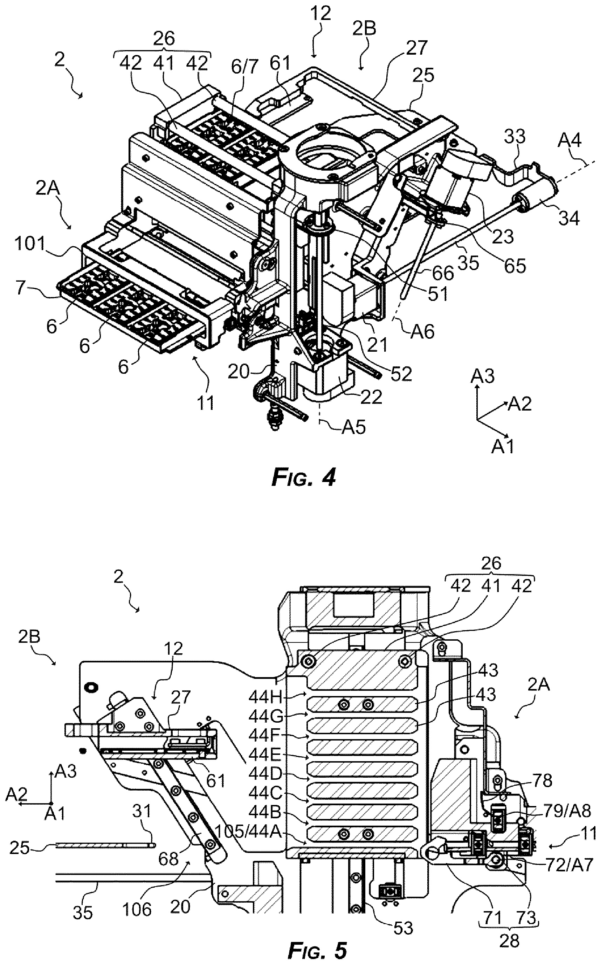

It will now be described a loading unit 2 according to a preferred, non-limiting embodiment, with reference to figures 4 to 15.

In this example, the above described loading unit 2 forms the loading unit 2 of the device 1 of figure 3.

Referring to figures 4 and 5, the loading unit 2 comprises a fixed structure 20, secured to the frame 10 of the device 1, three actuators 21, 22 and 23 (see figure 4), a displacer 25 also called "fork", a storage module 26 also called "lift", a carriage 27 also called "basket" or "nacelle", and a stop member 28 (see figure 5).

In this example, each of the actuators 21, 22 and 23 comprises a stepper motor.

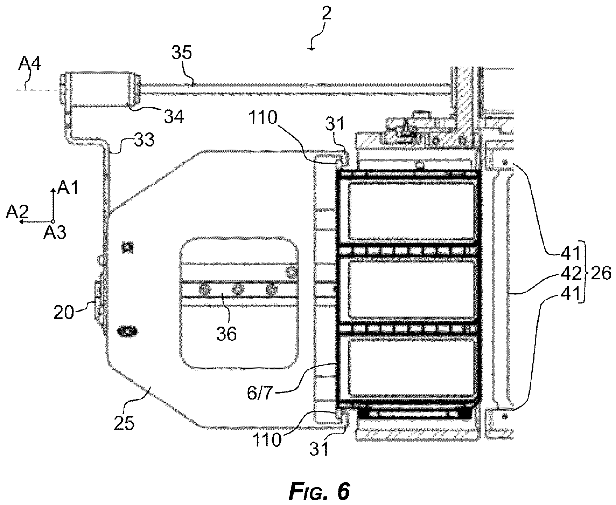

Referring to figures 4 and 6, the displacer 25 has in this example a flattened shape extending in a plane parallel to the axis A1 and A2, and defines two hooks 31 spaced from each other along the axis A1 and protruding from one side of the displacer 25 along the axis A2.

The other side of the displacer 25 along the axis A2 is connected to an attachment part 33 secured to a nut 34 so that a translation of the nut 34 along the axis A2 results in a corresponding translation of the displacer 25 along the axis A2.

In this example, the nut 34 cooperates with a screw 35 configured to be driven by the actuator 21 in rotation about a rotation axis A4 parallel to A2, so that a rotation of the screw 35 about said rotation axis A4 causes a translation of the nut 34 and thus of the displacer 25 along the axis A2 relative to the fixed structure 20.

In the example of figure 6, the loading unit 2 comprises a guiding rail 36 secured to the fixed structure 20 and configured to guide the displacer 25 when it is moved along the axis A2.

Referring to figures 4, 5 and 7, the storage module 26 has a globally parallelepipedic shape, comprising two side panels 41 spaced from each other along the axis A1 and connected to each other by transverse fasteners 42.

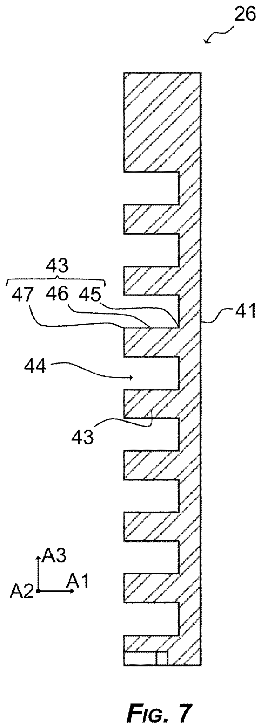

Each of the panels 41 has protrusions 43 spaced from each other along the axis A3 to define two-by-two between them grooves 44, 44A-44H extending parallel to the axis A2 (see figures 5 and 7).

With reference to figure 7, protrusions 43 have a proximal end 45 fixed to a body of the panel 41, a medial part 46, and a distal end 47.

The protrusions 43 are configured so that each of said grooves 44 is bounded along the axis A3 by the medial parts 46 of two respective protrusions 43 and, along the axis A1, by the body of the panel 41 on one side, each of said grooves 44 opening out through an aperture on the other side along A1, this aperture being formed by the distance between the corresponding protrusions 43 (see figure 7).

Referring to figure 5, each of the panels 41 has in this example eight grooves 44A-44H.

The side panels 41 of the storage module 26 are symmetrical to each other, so that each of the grooves of one of the panels 41 faces one respective of the grooves of the other panel 41.

In this example, the storage module 26 thus defines several, in this example eight, compartments superimposed along the axis A3, each compartment being designed to receive a sample holder 7.

In this example, the storage module 26 is arranged so that one lateral end of the sample holder 7 along the axis A1 can be received in one of the grooves 44 of one of the panel 41 and the other lateral end of the sample holder 7 along the axis A1 received in the facing groove 44 of the other panel 41, as illustrated for example in figure 4 in which the storage module 26 receive one sample holder 7, in this example in the highest compartment according to the axis A3.

Referring to figure 4, the storage module 26 is secured to a nut 51 so that a translation of the nut 51 along the axis A3 results in a corresponding translation of the storage module 26 along the axis A3.

In this example, the nut 51 cooperates with a screw 52 configured to be driven by the actuator 22 in rotation about a rotation axis A5 parallel to A3, so that a rotation of the screw 52 about said rotation axis A5 causes a translation of the nut 51 and thus of the storage module 26 along the axis A3 relative to the fixed structure 20.

As can be seen in figure 5, the loading unit 2 comprises a guiding rail 53 secured to the fixed structure 20 and configured to guide the storage module 26 when it is moved along the axis A3.

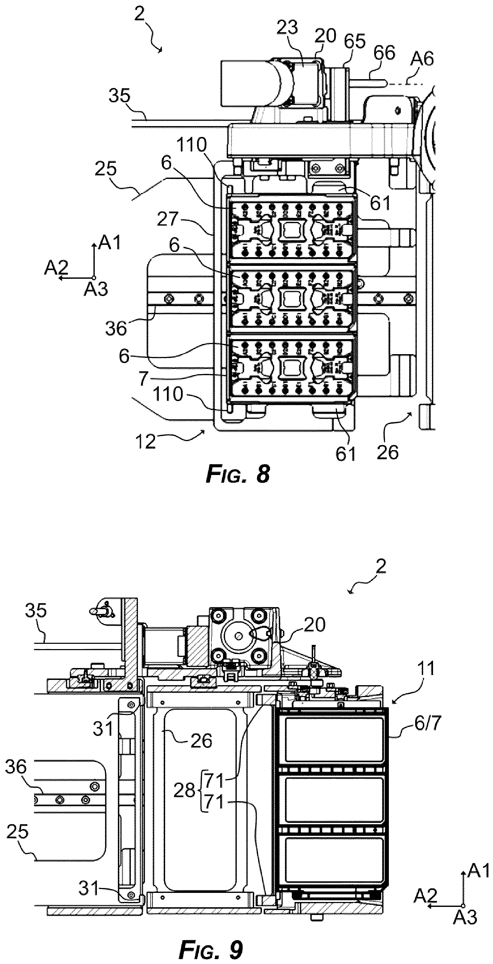

Referring to figures 4, 5 and 8, the carriage 27 forms in this example a frame extending substantially in a plane parallel to the axis A1 and A2, having internal plate elements 61 (see figure 4) configured to support a sample holder 7, as shown for example in figure 8.

The carriage 27 is secured to a nut 65 so that a translation of the nut 65 along an axis A6 results in a corresponding translation of the carriage 27 along the axis A6.

In this example, the axis A6 is oblique to the axis A2 and A3 and extends in a plane parallel to the axis A2 and A3. In other words, the axis A6 extends both vertically and horizontally when the device 1 is in operation.

The nut 65 cooperates with a screw 66 configured to be driven by the actuator 23 in rotation about said axis A6, so that a rotation of the screw 66 about the axis A6 causes a translation of the nut 65 and thus of the carriage 27 along the axis A6 relative to the fixed structure 20.

As can be seen in figure 5, the loading unit 2 comprises a guiding rail 68 connected to the fixed structure 20 and configured to guide the carriage 27 when it is moved along the axis A6.

Referring to figures 5 and 9, the stop member 28 comprises in this example two cleats 71 spaced from each other along the axis A1 and connected to each other by transverse fasteners (not shown).

The cleats 71 are both connected to the fixed structure 20 with a pivot connection 72 allowing a rotation of the stop member 28 about a rotation axis A7 parallel to A1.

In this example, the stop member 28 comprises counterweight parts 73 associated with the cleats 71.

Referring to figure 5, the loading unit 2 comprises a flap 78 connected to the fixed structure 20 with a pivot connection 79 allowing a rotation of the flap 78 about a rotation axis A8 parallel to A1.

The loading unit 2 thus comprises different moving parts that can be moved as described below.

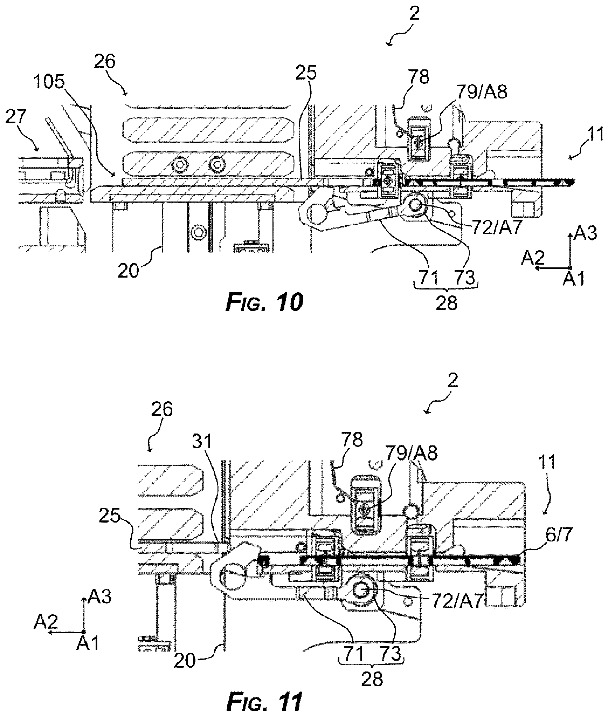

The displacer 25 is movable along the axis A2 relative to the fixed structure 20 from a first, backward, position illustrated in figures 4 and 5, to a second, forward, position illustrated in figure 10, and of course in the opposite direction from said forward position to said backward position, preferably while going through or at least partially inside one compartment of the storage module 26, this compartment depending of the position of the storage module 26 with respect to the entry area 11.

Thus, the displacer 25 is configured to pass, at least partially through at least one of said compartments of the storage module 26 when the displacer 25 moves the sample holder, in particular from one to the other between the entry area and at least one intermediate area that can be said first intermediate area.

By being moved from one of these positions to the other, the displacer 25 goes to intermediate positions, including those illustrated in figures 11 to 14.

In this example, the displacer 25 is connected to said attachment part 33 and to the guiding rail 36 so that it can be slightly moved along the axis A3 relative to the fixed structure 20 (see further below).

The storage module 26 is movable along the axis A3 relative to the fixed structure 20 - and thus relative to the entry area 11- from a first, upper, position illustrated in figures 4, 5, 10, 11 and 13, to a second, lower, position (not shown), and of course in the opposite direction from said lower position to said upper position. Referring to figure 5, the compartment formed by the groove 44A at the lower end of the storage module 26 is here aligned with the displacer 25 along the axis A3 when the storage module 26 is in the upper position. When the storage module 26 is in the lower position (not shown), the compartment formed by the groove 44H at the upper end of the storage module 26 is aligned with the displacer 25 along the axis A3. By being moved from one of these positions to the other, the storage module 26 goes to intermediate positions (not shown), including positions at which the compartments formed by the other grooves 44B to 44G are respectively aligned with the displacer 25 along the axis A3.

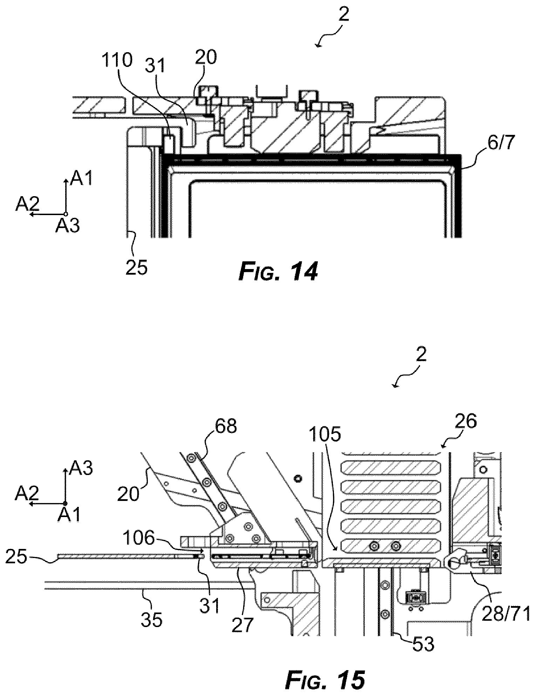

The carriage 27 is movable along the axis A6 relative to the fixed structure 20 from a first, lower, position illustrated in figures 10 and 15, to a second, upper, position illustrated in figures 4 and 5, and in the opposite direction from said upper position to said lower position.

The trajectory of the displacer 25 between its first, backward, position and its second, forward, position crosses or substantially crosses the trajectory of the carriage 27 between its first, lower, position and its second, upper, position so that displacer 25 and the carriage 27 are arranged to pass a sample holder from displacer 25 to the carriage 27 and vice versa. This way, the first movement mechanism 25, 27 is configured to transfer the support 7 from displacer 25 to carriage 27 and vice versa.

The displacer 25 is configured to pass, at least partially, through a space defined by the carriage 27 when the displacer moves the sample holder, in particular from one to the other between two areas that can include the storage area and another intermediate area, for example said first intermediate area.

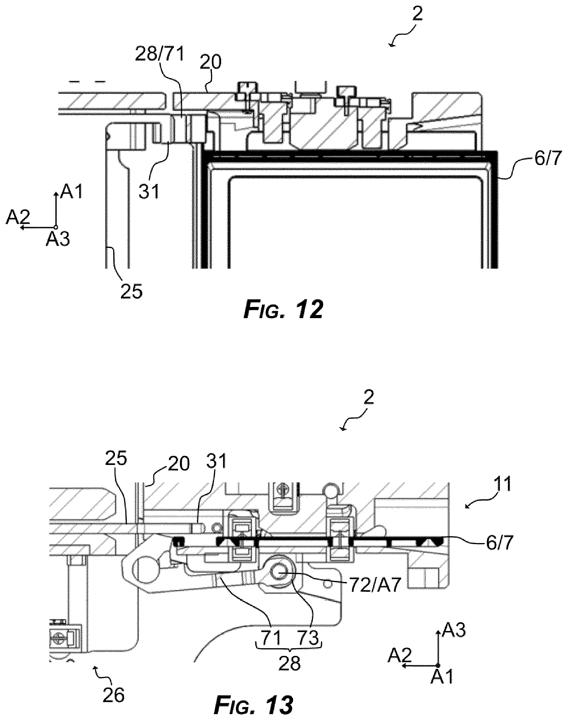

The stop member 28 is movable about the axis A7 relative to the fixed structure 20 from a first position, also called stop position, illustrated in figures 5, 11 and 15, to a second position, also called release position, illustrated in figures 10 and 13, and of course in the opposite direction from said release position to said stop position.

The flap 78 is movable about the axis A8 relative to the fixed structure 20 from a first position (not shown) to a second position - also called "opening position" - Illustrated in figures 5 and 11, and of course in the opposite direction from said second position to said first position.

The displacer 25 is configured to move the stop member 28 from the stop position to the release position when the displacer 25 is moved from the backward position to the forward position, as illustrated in figures 11 to 14. In figures 11 and 12, the displacer 25 is in an intermediate position in which its hooks 31 come into contact with a surface of the cleats 71 of the stop member 28. When the displacer 25 is moved from this intermediate position to the forward position, the hooks 31 exert a force on the surface of the cleats 71, causing the stop member 28 to pivot about the axis A8 from the stop position shown in figure 11 to the release position shown in figure 13.

When the displacer 25 is moved from the forward position to the backward position and when the hooks 31 move away from the cleats 71, the stop member 28 is subjected to a force that pulls it back and maintains it to the stop position, in this example under the action of the counterweight parts 73.

The displacer 25 and the carriage 27 form a movement mechanism of the loading unit 2 configured to move a sample holder between different areas of the device 1. In the example of figure 3, the movement mechanism of the loading unit 2 is then independent, distinct, from the movement mechanism 5.

The loading unit 2 comprises other components including sensors (not shown), in this example one sensor configured to detect the second position of the flap 78, one sensor configured to detect the presence of a sample holder 7 at the entry area 11 and preferably to check if this sample holder 7 is inserted in device 1 in the right direction and/or orientation, and at least one sensor - such like an optical barcode reader or a Radio Frequency Identification (RFID) reader-configured to read the barcode - or any other identifier like an optical identifier, RFID identifier, etc. - of one or more microfluidic chips of the sample holder.

The device 1 of figures 2 and 3 also comprises an electronic and/or computer system 49 configured to control the device 1, in particular the actuators 21, 22 and 23 and the movements mechanism 5, according to data supplied by said sensors and computer programme instructions.

More generally, electronic and/or computer system 49 controls all parts of device 1, in particular all the modules, units, motors, pneumatic parts, electric parts, etc.

The electronic and/or computer system 49 comprises at least one computer, one central processing or computing unit, one analogue electronic circuit (preferably dedicated), one digital electronic circuit (preferably dedicated) and/or one microprocessor (preferably dedicated) and/or software means.

Referring to figure 3, the units 2, 3 and 4, and the movement mechanism 5, are compactly arranged, thanks to the architecture of the above described loading unit 2, and in particular of the arrangement of the moving parts of the loading unit 2 and the oblique orientation of the axis A6.

In this example, the thermocycler unit 3 is generally positioned vertically above the rear part of the loading unit 2, and the scanning unit 4 is intricately positioned at the rear part of the loading unit 2.

The device 1 of the invention defines different areas in which one or more sample holders can be placed simultaneously or successively.

Referring to figure 2 and 4, the entry area 11 is formed by a front part 2A of the loading unit 2 opening to the outside of the device 1 through a slot 101. The device 1 is configured to allow a user to insert, via said slot 101, a sample holder 7 in the entry area 11, so as to place the sample holder 7 in an entry position as illustrated in figure 4 (see the sample holder 7 to the left of figure 4), or conversely to allow a user to remove the sample holder 7 from the entry area 11 and more generally from the device 1.

The loading area 12 is formed by a rear part 2B of the loading unit 2 which receives the carriage 27 when placed in the upper position illustrated in figures 4, 5 and 8. The sampler holder 7 illustrated in figure 8 is positioned in a loading position, within the loading area 12.

The space formed by the compartment of the storage module 26 that is aligned with the displacer 25 along the axis A3 defines an intermediate area, also called storage area 105 (see figure 5). The compartment of the storage module 26 defining the storage area 105 is formed by one of the grooves 44A-44H, depending on the position of the storage module 26.

The device 1 defines another intermediate area 106 receiving the carriage 27 when placed in the lower position illustrated in figure 15.

Referring to figure 5, the entry area 11 and the intermediate areas 105 and 106 are positioned one after the other along the axis A2, respectively from the front part 2A to the rear part 2B of the loading unit 2, and are aligned with respect to the axis A3. The loading area 12 is offset from the areas 12, 105 and 106 along the axis A3.

In the described example, the first movement mechanism 25, 27 is configured to move a sample support 7 between entry area 11 and loading area 12 - and even between entry area 11, loading area 12, storage area 105 and intermediate area 106 -, this support 7 receiving several samples 6.

In the described example, the second movement mechanism 5 is configured to extract one sample 6 from the sample support 7 in the loading area 12 and to move only this one sample 6 extracted from the sample support 7 between loading area 12, thermal and/or pressure area 13 and scanning area 14 preferably in any order.

The second movement mechanism 5 and the first movement mechanism 25, 27 are configured so that the second movement mechanism 5 can move at least one sample 6 while the first movement mechanism 25, 27 can move one support 7.

Device 1 is configured to simultaneously operate any combination among the loading unit 2, the thermal and/or pressure unit 3, the scanning unit 4, the second movement mechanism 5 and the first movement mechanism 25, 27.

The device 1 can be used to carry out the following non-limitative operations.

According to a storage operation, the device 1 is configured to move a sample holder from the entry area 11 to the storage area 105.

In an initial configuration of the loading unit 2 for the storage operation, the displacer 25 is in the backward position, the storage module 26 is in the upper position and does not store any sample holder in this example, the carriage 27 is in the upper position, the stop member 28 is in the stop position, and the flap 78 is in the first position.

A sample holder 7 receiving in this example three microfluidic chips 6 is inserted in the device 1 by a user, thus moving from a free position illustrated in figure 2 to the entry position illustrated in figure 4, in which the sample holder 7 is in abutment against the cleats 71 of the stop member 28 placed in said stop position. During this change of position, the sample holder 7 moves the flap 78 about the axis A8 from said first position to said second position.

In this example, detection of the flap 78 in the second position and of the presence of the sample holder 7 at the entry area 11, and reading of barcodes or identifier of the microfluidic chips 6 received in the sample holder 7, causes the displacer 25 to move from the backward position to a position in which the hooks 31 are at least partially engaged in the storage area 105, in this example in the compartment formed by the grooves 44A (see figure 5).

The storage module 26 is then slightly moved upward, from the position of the storage module 26 shown in figure 10 to that of figure 11, causing the displacer 25 to be slightly moved along the axis A3 by the corresponding protrusions 43 of the storage module 26. The displacer 25 is then moved to the forward position illustrated in figures 13 and 14, causing the stop member 25 to move from the stop position (see figure 11) to the release position (see figure 13).

The storage module 26 is then slightly moved downward along the axis A3, from the position of the storage module 26 shown in figure 13 to said upper position shown in figure 5, in order to engage the hooks 31 of the displacer 25 with corresponding retention elements 110 of the sample holder 7 (see figure 14).

The displacer 25 is then moved backward to pull the sample holder 7 until it is placed within the storage area 106, more specifically in the compartment formed in this example by the grooves 44A of the storage module 26.

The storage module 26 is then slightly moved downward along the axis A3, to disengage the hooks 31 of the displacer 25 from said retention elements 110 of the sample holder 7.

The displacer 25 is then moved to the backward position.

The above described storage operation can be carried out to place a sample holder in another compartment of the storage module 26, with a configuration of the loading unit 2 in which the storage module 26 is placed in another position. The description above applies mutatis mutandis.

According to a loading operation, the device 1 is configured to move a sample holder from the storage area 105 to the loading area 12.

In an initial configuration of the loading unit 2 for the loading operation, the displacer 25 is in the backward position, and the storage module 26 is in the upper position as shown in this example in figure 5. In this example, the storage module 26 receives a sample holder in the compartment formed by the grooves 44A.

The carriage 27 is moved from the upper position shown in figure 5 to the lower position shown in figure 15.

The displacer 25 is then moved from the backward position to a position in which the hooks 31 are at least partially engaged in the storage area 105, in this example in the compartment of the storage module 26 formed by the grooves 44A.

The storage module 26 is then slightly moved upward, to engage the hooks 31 of the displacer 25 with corresponding said retention elements 110 of the sample holder 7.

The displacer 25 is then moved to the backward position to pull the sample holder 7 until it is placed in said intermediate area 106.

The carriage 27 is then moved from the lower position to the upper position, thus moving the sample holder 7 from the intermediate area 106 to the loading area 12 in which it is placed in said loading position as illustrated in figure 8.

The above-described loading operation can be carried out to take a sample holder from another compartment of the storage module 26, with a configuration of the loading unit 2 in which the storage module 26 is in another position than that described above. The description above applies mutatis mutandis.

According to a sample processing operation, the device 1 is configured to move at least one of the microfluidic chips 6 received in a sample holder 7 placed in the loading position 12 shown in figure 8.

Referring to figures 1 and 3, the movement mechanism 5 grabs in this example one of the microfluidic chips 6 received in the sample holder 7 located in the loading area 12, and moves this microfluidic chip 6 to the area 13 to perform a thermocycling operation, which is known per se. When the thermocycling operation is complete, the movement mechanism 5 moves this microfluidic chip, or another microfluidic chip located in the area 13, to place it in the sample holder 7 located in the loading area 12 or to place it in the scanning area 14.

In parallel or successively, the movement mechanism 5 can grab at least one of the microfluidic chips 6 received in the sample holder 7 located in the loading area 12, and move this microfluidic chip to the scanning area 14 to perform a scanning operation, which is known per se. When the scanning operation is complete, the movement mechanism 5 moves this microfluidic chip, or another microfluidic chip located in the scanning area 14, to place it in the sample holder 7 located in the loading area 12 or to place it in the thermal and/or pressure area 13.

According to a return to storage operation, the device 1 is configured to move a sample holder 7 from the loading area 12 to the storage area 105.

The loading operation steps described above apply mutatis mutandis in reverse order.

According to an unloading operation, the device 1 is configured to move a sample holder 7 from the storage area to the entry area 11.

The storage operation steps described above apply mutatis mutandis in reverse order.

The unloading and return to storage operations differ from the storage and loading operations, respectively, in that the displacer 25 does not pull the sample holder backward but it pushes the sample holder forward, which does not require the above described slight upward and downward movements of the storage module 26 that are carried out to engage the hooks 31 of the displacer 25 with, or disengage them from, the retention elements 110 of the sample holder.

In this example, the loading unit 2 described above with reference to figures 4 to 15 forms the loading unit 2 of the device 1 of figure 1 and of the embodiment of figures 2 and 3. Of course, the device 1 of figure 1 may comprise a loading unit 2 according to alternative embodiments, including those described below.

In addition, the loading unit 2 described above, and its alternative embodiments, may form a loading unit of a device different from that of figure 1, for example a device for genetic analysis using a technique different than the dPCR method described in WO2021/130271A1.

In some embodiments, not shown, the loading unit 2 does not comprise a storage module. In such embodiments, the device can be configured to move the sample holder from the entry area to the loading area either directly or via an area similar than the intermediate area 106 shown in figure 5.

The storage module, when present, can have any number of compartments and/or grooves, in particular less or more than eight. Moreover, the compartments can be arranged according to another axis than the vertical axis A3. For example, the storage module can comprise two vertical stacks of compartments arranged side by side along the axis A1; in this case, the storage module can be configured to move along axis A3 and to move along axis A1.

In another example, not shown, the storage module can be configured to be movable in translation along the axis A3 and/or along another axis oblique to A3 with respect to the entry area 11, so that storage module 26 is arranged to alternately present one of its superimposed compartments to the entry area 11.

Axis A6 can be strictly vertical or partially vertical and partially horizontal.

In other embodiments, axis A3 extends partially vertically and/or axis A1 extends partially horizontally and/or axis A2 extends partially horizontally.

The displacer 25 may have another shape and/or be configured to cooperate with sample holders not by hooking but according to another technique, for example using magnetic attraction and/or pneumatic or suction force and/or a pneumatic or electrical plier.

In some embodiments, not shown, the carriage 27 is configured to be moved along the axis A2 or A3, or according to a combination of movements than can be linear and/or curved.

The above description applies mutatis mutandis with a sample holder that do not receive one or more distinct microfluidic chips but with a sample holder formed by one or more microfluidic chips.

In the previous description, the sample holder 7 can be configured to receive one or more samples or can be directly formed by one or more samples. In the previous description, each sample 6 can be a microfluidic chip 6, or any other sample such like at least one microscope slide, one or more microwells, etc.

One or more of the elements of the device described above may comprise, or be made of, metal, preferably stainless steel.

In a non-limitative way, said electronic and/or computer system 49 can be configured and/or programmed to identify one or more barcodes or any other identifier (optical identifier, RFID identifier, etc.) of one or more samples 6, and to associate such barcodes or identifier with:
- a location of corresponding sample(s) within the device 1, for example within the loading unit - e.g. within the storage module, in particular a specific compartment of storage module 26 - and/or the unit 3 and/or the scanning unit, and/or
- an optical signal detected by scanning unit 4 from corresponding sample(s) and stored by the electronic and/or computer system 49.

This allows to simultaneously operate the loading unit 2, the unit 3, the scanning unit 4, and the movement mechanism 5 on several samples with great efficiency and time saving while associating correct data to corresponding samples.

While device 1 has been described for two unit chambers 301, 302, this device can comprise more generally at least one unit chamber.

While the previously described device has been described for genetic analysis, in particular for genetic analysis by polymerase chain reaction (PCR) such like digital PCR, it can be used for many other applications such like any other application requiring imaging - preferably by fluorescence - and/or thermal or pressure treatment of a sample.

## Claims

1. Device (1) comprising:
- a loading unit (2) comprising an entry area (11), a loading area (12), and a first movement mechanism (25, 27) configured to move a sample holder (7) receiving or comprising one or more samples from one to the other between said entry area (11) and said loading area (12),
- a thermal and/or pressure unit (3) defining a thermal and/or pressure area (13) configured to receive one or more samples for a thermal and/or pressure operation,
- a scanning unit (4) defining a scanning area (14) configured to receive one or more samples for a scanning operation,
- a second movement mechanism (5) configured to move at least one sample between two areas selected from a list comprising said loading area (12), said thermal and/or pressure area (13), and said scanning area (14).

2. Device (1) according to claim 1, wherein said first movement mechanism comprises a displacer (25) configured to cooperate with said sample holder (7) to move said sample holder (7) from one to the other between said entry area (11) and at least one intermediate area (105, 106).

3. Device (1) according to claim 2, wherein the displacer (25) comprises one or more hooks (31) configured to cooperate with said sample holder (7) to pull said sample holder (7) from said entry area (11) to said intermediate area (105, 106) and/or from said intermediate area (105, 106) to said entry area (11).

4. Device (1) according to claim 2 or 3, wherein said first movement mechanism comprises a carriage (27) configured to cooperate with said sample holder (7) to move said sample holder (7) from one to the other between said intermediate area (105, 106) and said loading area (12).

5. Device (1) according to claim 4, wherein the displacer (25) is movable along a first axis (A4) and the carriage (27) is movable along an axis (A6) that is oblique or perpendicular to the first axis (A4).

6. Device (1) according to anyone of claims 1 to 5, wherein the loading unit (2) comprises a storage module (26) defining compartments, each of which being intended to store a respective sample holder (7).

7. Device (1) according to claim 6, comprising a storage area (105), the storage module (26) being movable between several positions in each of which one respective of the compartments is configured to form said storage area (105).

8. Device (1) according to claim 7 including the features of claim 2, wherein the displacer (25) is configured to move said sample holder (7) from one to the other between said entry area (11) and said storage area (105) and/or between said storage area (105) and said intermediate area (106).

9. Device (1) according to claim 7 or 8 including the features of claim 2, wherein the storage module (26) is configured to move the displacer (25) and/or said sample holder (7) to engage the displacer (25) with, or disengage it from, the sample holder (7).

10. Device (1) according to anyone of claims 6 to 9 including the features of claim 2, wherein the displacer (25) is movable along a first axis (A4) and the storage module (26) is movable along an axis (A5) that is perpendicular or oblique to the first axis (A4).

11. Device (1) according to anyone of claims 1 to 10, wherein the loading unit (2) comprises a stop member (28) forming a stop for said sample holder (7).

12. Device (1) according to claim 11 including the features of claim 2, wherein the stop member (28) is configured to be moved toward a release position under the action of a movement of the displacer (25).

13. Method for controlling a device (1) according to anyone of claims 1 to 12, comprising:
- a loading step that comprises moving a sample holder (7) from said entry area (11) to said loading area (12) with said first movement mechanism (25, 27), and/or
- an unloading step that comprises moving a sample holder (7) from said loading area (12) to said entry area (11) with said first movement mechanism (25, 27), and/or
- a step of moving one or more of said samples from said loading area (12) to said thermal and/or pressure area (13), with said second movement mechanism (5), for a thermal and/or pressure operation, and/or
- a step of moving one or more of said samples from said loading area (12) to said scanning area (14), with said second movement mechanism (5), for a scanning operation, and/or
- a step of moving one or more of said samples from said thermal and/or pressure area (13) and/or from said scanning area (14) to said loading area (12) with said second movement mechanism (5).

14. Computer program comprising instructions to cause a device according to anyone of claims 1 to 12 to execute the steps of a method according to claim 13.

15. Computer-readable storage medium having stored thereon a computer program according to claim 14.
